# EUROPÄISCHE PATENTSCHRIFT

(11) **EP 3 865 771 B1**
(45) Veröffentlichungstag und Bekanntmachung des Hinweises auf die Patenterteilung: **28.06.2023**
(21) Anmeldenummer: 20000469.5
(22) Anmeldetag: 15.12.2020
(51) Int. Cl.: F23G 5/50

(54) **VERFAHREN ZUM BETREIBEN EINER FEUERUNGSANLAGE**
METHOD FOR OPERATING A COMBUSTION PLANT
PROCÉDÉ DE FONCTIONNEMENT D'UNE INSTALLATION DE COMBUSTION

(30) Priorität: 14.02.2020 DE 102020000980
(43) Veröffentlichungstag der Anmeldung: 18.08.2021
(60) Teilanmeldung: 21201665.3
(73) Patentinhaber: Martin GmbH für Umwelt- und Energietechnik, 80807 München (DE)
(72) Erfinder: Jell, Sebastian Josef, DE - 81667 München (DE); Schönsteiner, Max Josef, DE-80995 München (DE); Martin, Ulrich, DE-81247 München (DE)
(74) Vertreter: Castell, Klaus

(56) Entgegenhaltungen:
- EP-A1- 0 480 047
- EP-A2- 0 352 620
- WO-A1-90/09552
- DE-A1-102010 031 528

## Beschreibung

Die Erfindung betrifft ein Verfahren zum Betreiben einer Feuerungsanlage. Beim Betreiben einer Feuerungsanlage ist es wichtig, dass von der Aufgabeschurre über den Feuerrost bis zum Schlackenaustrag eine definierte Menge Material pro Zeit die Feuerungsanlage durchläuft.

An der Aufgabeschurre wird ein Trichter im Chargenbetrieb über einen Greifer mit Material gefüllt. Dieses Material ist ein mit positiver Energiebilanz, chemisch umwandelbar Stoff und im Rahmen dieser Anmeldung vorzugsweise Müll. Dieses Material kann nass und schwer sein und schnell in den Trichter hinein rutschen, es kann auf den Wandungen des Trichters liegen bleiben, sich im Trichter versperren oder aus anderen Gründen nicht kontinuierlich über den Trichter in den Bereich des Feuerungsrostes gelangen.

Auf dem Feuerungsrost entzündet sich das Material und es brennt mit unterschiedlicher Intensität und Wärmefreisetzung, abhängig von der Zusammensetzung des Mülls. Wenn mehrere Roste nebeneinander betrieben werden, besteht darüber hinaus die Möglichkeit, dass bei der Bewegung des Mülls über unterschiedliche Rostbahnen der Müll auch unterschiedlich ausbrennt.

EP 0 352 620 A2 und WO 90/09552 A1 offenbaren jeweils ein Verfahren zur Regelung einer Verbrennungsanlage mit einem Verbrennungsrost.

In vielen Fällen dienen Feuerungsanlagen, insbesondere Müllverbrennungsanlagen, der umweltfreundlichen Entsorgung von Abfällen mit möglichst geringen Emissionen und der Erzeugung von Energie. Hierfür sollte die Wärmefreisetzung möglichst konstant sein, um einerseits eine kontrollierte Verbrennung zu erreichen und andererseits eine möglichst unveränderte konstante Dampfleistung bereitzustellen.

Der Erfindung liegt daher die Aufgabe zu Grunde, die letztlich erzeugte Feuerungsleistung, die sich in der Regel in der Dampfleistung widerspiegelt, möglichst konstant zu halten.

Diese Aufgabe wird mit einem Verfahren zum Betreiben einer Feuerungsanlage mit einer Aufgabeschurre und einer Kamera zur Erfassung eines Bildes der Oberfläche der Schurre dadurch gelöst, dass die Schurre eine Rutsche aufweist, auf der Material zu einem Rost fließt, und mit einer Bildauswertung die Abdeckung der der Schurre und insbesondere der Rutsche mit Material und/oder die Positionsänderung und damit die Bewegung einzelner Komponenten oder Flächenbereiche innerhalb der Schurre ermittelt wird.

Die Rutsche ist dabei eine gegenüber der Waagerechten schräge Fläche der Aufgabeschurre. Die Rutsche kann eine untere oder eine seitliche Fläche der Aufgabeschurre sein, wobei an diesen Flächen das auf die Schurre aufgegebene Material entlang gleitet, um zur Feuerungsanlage zu gelangen.

Sofern in einem bestimmten Bereich das Wandmaterial der Rutsche, das in der Regel eine Eisenfläche ist, bedeckt ist und abhängig von der Bewegung des Beschicckolbens statisch ist oder sich die Bedeckung verändert, ist davon auszugehen, dass das Material ordnungsgemäß zur Feuerungsanlage gleitet. Die Bewegung des Brennstoffs auf der Rutsche in Richtung der Feuerung ist mit der Bewegung des Beschickkolbens gekoppelt. Bewegt sich dieser so bewegt sich das Material. Bewegt sich dieser nicht, so bewegt sich das Material nicht. Ist dieser Zusammenhang nicht gegeben und bewegt sich das Material obwohl sich der Beschicker nicht bewegt oder bewegt sich das Material nicht obwohl sich der Beschicker bewegt, besteht ein Fehler, der darauf hinweist, dass das Material nicht ordnungsmäßig zur Feuerungsanlage gleitet. Dabei kann ein senkrechter Wandbereich oder ein Bereich auf der Rutsche beobachtet werden. Vorzugsweise wird eine Fläche der Schurre beobachtet, die als Rutsche gegenüber der Waagrechten einen möglichst kleinen Winkel hat, da dann eine bei fehlerhaftem Nachrutschen detektierte Fläche größer ist.

Daher wird vorzugsweise die Abdeckung einer unteren Seite der Schurre mit Material ausgewertet, während die anderen Seiten der Schurre in der Regel zusätzliche Anhaltspunkte bilden.

Ein bevorzugtes Ausführungsbeispiel sieht vor, dass die Position zumindest eines Grenzpunktes im Bild ermittelt wird, an dem einerseits Material die Schurre abdeckt und andererseits die Oberfläche der Schurre sichtbar ist. Vorteilhaft ist es, wenn mehrere Grenzpunkte ermittelt werden und in diesem Fall ist es auch möglich, die Position einer die Grenzpunkte verbindenden Linie im Bild zu ermitteln.

Zur Ermittlung der Befüllung der Schurre können auch definierte Punkte an der Seite der Schurre berechnet werden. In diesem Fall wird der Abstand mindestens eines Grenzpunktes zu einem definierten Punkt an einer Seite der Schurre ermittelt.

Mit anderen Worten ausgedrückt ist es vorteilhaft, die sichtbare Linie zwischen Schurre und Material zu ermitteln. Zur Erhöhung der Genauigkeit der Bildauswertung kann das Bild der Oberfläche der Schurre in mehrere Zonen aufgeteilt werden. Dies ermöglicht es, mit der Bildauswertung die Abdeckung in den einzelnen Zonen zu ermitteln. Daraus kann der Materialstrom an jeder beliebigen Stelle innerhalb der Schurre ermittelt werden. Ein dynamisches Verhalten der Feuerungsanlage kann ermittelt werden, wenn in zeitlichem Abstand mehrere Bilder aufgenommen werden und mittels der Bildauswertung aus der Veränderung der Bilder das Füllniveau in der Schurre ermittelt wird. Dies ermöglicht es dann auch, aus der Veränderung der Bilder die Geschwindigkeit zu ermitteln, mit der das Material zur Feuerungsanlage fließt. Die Geschwindigkeit bildet sodann eine Möglichkeit auch die Materialmenge zu erfassen, die zum Rost fließt.

Außerdem können mittels bildgebenden Verfahren die Positionsänderung und damit die Bewegung einzelner Komponenten oder Flächenbereiche innerhalb der Schurre nachverfolgt werden. Hierbei ist es notwendig in zeitlichem Abstand mehrere Bilder aufzunehmen. Diese Bilder können als Einzelbilder oder als Film aufgenommen werden. Innerhalb der Schurre werden signifikante Komponenten oder Flächenbereiche nach der Aufgabe des Materials ausgewählt und deren Bewegung detektiert (bis die ausgewählten Komponenten verdeckt werden). Die Auswahl erfolgt automatisiert und kann basierend auf mittels künstlicher Intelligenz eingelernter Strukturen und Gegenstände, basierend auf signifikanten Formen, Farben oder Umrissen von Material innerhalb der Schurre oder basierend auf zufälligen bzw. definierten Bereichen innerhalb der Schurre getroffen werden. Dieses Verfahren erlaubt, wie das Verfahren zur Erkennung einzelner Punkte im Übergang zwischen Schurre und Material, den Materialfluss innerhalb der Schurre festzustellen. Das Verfahren kann einzeln oder in Ergänzung zur Erkennung einzelner Punkte im Übergang zwischen Schurre und Material eingesetzt werden.

Ein im Bereich der Aufgabeschurre detektierter Fehler führt häufig unmittelbar zu Fehlern bei der Verbrennung auf dem Rost. Es wird daher weiterbildend vorgeschlagen, dass bei einer vorbestimmten Abdeckung oder einer vorbestimmten Änderung der Abdeckung der Schurre und insbesondere der Rutsche mit Material oder einem bestimmten Materialfluss abhängig von der Beschickerbewegung eine Aktion ausgelöst wird. Diese Aktion kann ein frühzeitiges Eingreifen in die Regelung der Anlage sein. Dabei kann beispielsweise ein Räumhub veranlasst werden und im Falle eines unkontrollierten Müllflusses kann durch das Luftmanagement und/oder die Rostgeschwindigkeit eine Anpassung erreicht werden. Auch ein Eingriff in die Beschickergeschwindigkeit und/oder Position ist im Falle unkontrollierten Müllflusses zur Optimierung der Verbrennung durchführbar. Zusätzlich ist eine Hilfestellung (Signal an den Kranführer) oder ein direkter Eingriff in die Materialaufgabe der Schurre durch den Kran abhängig vom detektierten Füllstand der Schurre möglich.

Der Einsatz einer Bildauswertung ermöglicht es, in Flussrichtung des Materials am Ende des Bildes den Übergang von Material zu Hintergrund als Position mindestens eines Punktes und vorzugsweise an der Linie zu ermitteln. Alternativ oder kumulativ zur Abdeckung der Rutsche kann somit bei einer stationären Anordnung der Kamera am ermittelten Bild die Höhe einer Linie ausgewertet werden, die durch den Übergang von Material zu Schurre ermittelt werden kann. Hierfür können einzelne Punkte oder eine durchgehende Linie, die auch gemittelt werden kann, ermittelt werden.

Dies ermöglicht es weiterbildend, dass der Punkt oder die Linie mit einem Grenzwert verglichen werden und bei Überschreiten dieses Grenzwertes eine Aktion ausgelöst wird. Diese Aktion entspricht den oben genannten Aktionen.

Weiterbildend kann auch am Ende des Feuerungsrostes eine Bildauswertung dazu verwendet werden, auf die Feuerungsanlage einzuwirken.

Feuerungsanlagen mit einem Rost, an dessen Ende eine Kamera angeordnet ist, sind bekannt. Dabei bildet das Ende des Rostes den Bereich, an dem die Schlacke auf dem Rost anfällt. Eine dort positionierte Kamera, die vom Schlackenbereich her zum Brennbett gerichtet ist, zeigt, wie das Material im Brennbett verbrennt. Dabei zeigt die Helligkeit die Intensität des Ausbrands und der Ort der Helligkeit zeigt, wo das Material auf dem Rost besonders gut ausbrennt.

Weiterbildend wird nun vorgeschlagen, diese Kamera mit einer Bildauswertung zu kombinieren, die eine Brennbettdicke und/oder eine Ausbrandlinie und/oder die Bewegung einzelner Komponenten oder Flächenbereiche ermittelt. Bei einer stationären Kamera zeigt das Bild das Brennbett und statische Merkmale innerhalb des Feuerraums. Der Abstand zwischen statischem Merkmal und Brennbett ist direkt proportional zur Höhe des Brennbetts. Ein zu hohes Brennbett lässt auf einen Betrieb schließen, bei dem zu viel Material aufgegeben oder eine zu geringe Schürbewegung, die das Material zu langsam bewegt. Ein besonders niedriges Brennbett, das aus einer niedrigen Linie im Bild abgeleitet werden kann, lässt auf eine Materialzufuhr schließen, bei der nicht genügend Material aufgegeben wird und/oder auf eine zu intensive, die das Material zu schnell bewegt.

Zusätzlich wird nun vorgeschlagen, diese Kamera mit einer Bildauswertung zu kombinieren, die die Ausbrandlinie ermittelt. Bei einer stationären Kamera zeigt das Bild den Übergang zwischen brennendem und ausgebranntem Material als Ausbrandlinie. Dieser Kontrast bildet in der Praxis eine Linie, die entweder näher am oberen Rand des mit der Kamera aufgenommenen Bildes oder näher am unteren Rand dieses Bildes liegt. Die Höhe der Linie ist somit direkt proportional zur Lage des Feuers. Ein in Richtung der Längserstreckung des Rostes zu langes Feuer lässt auf eine Materialzufuhr schließen, bei der zu viel Material aufgegeben wird oder das Material schlecht brennbar ist. Ein besonders kurzes Feuer, das aus dem Bild abgeleitet werden kann, lässt auf eine Materialzufuhr schließen, bei der nicht genügend Material aufgegeben wird. Weiterhin erlaubt die Änderung der Ausbrandlinie Rückschlüsse über die Schürwirkung des Rostes und das Primärluftmanagement und ermöglicht es diese Parameter anzupassen um die Verbrennung zu verbessern. Auch eine Vergleichmäßigung der Brennstoffmenge zwischen verschiedenen Rostbahnen wird mittels der Ausbrandlinie ermöglicht.

Ergänzend können mittels bildgebenden Verfahren die Bewegung einzelner Komponenten oder Fraktionen innerhalb des Brennbetts nachverfolgt werden. Fraktionen sind hierbei Flächenbereiche, die durch ihre Struktur als solche erkennbar sind oder als Flächenbereiche ausgewählt wurden. Hierbei ist es notwendig in zeitlichem Abstand mehrere Bilder aufzunehmen. Innerhalb des Brennbetts werden signifikante Komponenten oder Fraktionen nach der Aufgabe des Materials ausgewählt und deren Bewegung solange detektiert bis die ausgewählten Komponenten verdeckt werden. Die Auswahl erfolgt automatisiert und kann basierend auf mittels künstlicher Intelligenz eingelernter Strukturen und Gegenständen, basierend auf signifikanten Formen, Farben oder Umrisse von Material innerhalb der Schurre oder basierend auf zufälligen bzw. definierten Bereichen innerhalb der Schurre getroffen werden. Dieses Verfahren erlaubt den Materialstrom innerhalb des Brennbetts festzustellen. Das Verfahren kann einzeln oder in Ergänzung zur Erkennung der Brennbetthöhe und der Feuerlänge eingesetzt werden.

Auf diese Art und Weise lässt auch eine Bildauswertung am Ende des Rostes einen Rückschluss auf die Aufgabevorrichtung zu.

Daher ist es möglich, mit einer gut eingestellten Bildauswertung und vorzugsweise auch mit einem lernenden System, wie beispielweise einem neuronalen Netzwerk, ein zu dünnes oder zu dickes Brennbett und ein zu langes oder zu kurzes Feuer, das heißt eine falsche Position der Ausbrandlinie zu erkennen.

Diese Informationen kann mit einem Sollwert verglichen werden, sodass abhängig von der Feuerlage und/oder der Brennbettdicke und/oder der Bewegung einzelner Komponenten oder Flächenbereiche eine Aktion ausgelöst werden kann. Diese Aktion kann wiederum, wie oben angegeben, ein Einwirken auf die Förderung auf dem Rost oder die Gasverhältnisse sein. Daher wird weiterbildend vorgeschlagen, dass abhängig von der Feuerlage auf dem Rost, insbesondere in Längsrichtung des Rostes, und/oder der Brennbettdicke automatisch auf eine Steuerung oder eine Regelung der Feuerungsanlage eingewirkt wird. Und daher wird vorgeschlagen, dass die Rostgeschwindigkeit abhängig von der Feuerlage und/oder der Brennbettdicke gesteuert oder geregelt wird. Dabei ist es besonders vorteilhaft, wenn die Rostgeschwindigkeit einzelner Rostzonen oder nebeneinander liegender Rostbahnen gesteuert oder geregelt wird.

Kumulativ oder alternativ kann auch die Luftführung der Feuerungsanlage abhängig von der Brennbettdicke und/oder der Feuerlage gesteuert oder geregelt werden. Dabei wird insbesondere die Primärluft der Feuerungsanlage abhängig von der Feuerlage und/oder der Brennbettdicke gesteuert oder geregelt.

Besonders vorteilhaft ist es, wenn die Feuerung einzelne Rostbahnen aufweist, die mit einer Bildauswertung analysiert werden, sodass die Beschickung einzelner Rostbahnen der Feuerungsanlage abhängig von der Brennbettdicke und/oder der Feuerlage gesteuert oder geregelt werden kann. Dafür kann beispielsweise die Hublänge angepasst werden oder es wird ein Nullpunktversatz des Beschickers eingestellt.

Besonders vorteilhaft ist es, wenn die einzelnen Rostbahnen über mehrere Antriebe verfügen, sodass die Intensität der Schürbewegung der einzelnen Rostzonen abhängig von der Brennbettdicke und/oder der Feuerlage gesteuert oder geregelt werden kann. Dafür kann beispielsweise die Schürgeschwindigkeit angepasst werden.

Vorteilhaft ist eine Kopplung beider optischer Kamerasysteme. So können ausgelöste Eingriffe durch die Kamera oberhalb der Schurre mittels der Kamera am Brennbettende überprüft werden. Durch den Einsatz von Regelkreisen oder neuronalen Netzwerken ist es möglich die ausgelösten Eingriffe zu optimieren.

Weiterbildend wird ein Rost vorgeschlagen, der mehrere Rostzonen und/oder mehrere Rostbahnen, und mehrere Brennstoffzufuhreinrichtungen aufweist, bei dem zur Einstellung einer gleichmäßgen Wärmefreisetzung auf dem Rost die Temperatur pro Rostzone und/oder pro Rostbahn gemessen wird und abhängig von der gemessenen Temperatur die Brennstoffzufuhreinrichtungen gesteuert werden.

Dabei ist es besonders vorteilhaft, wenn pro Rostzone und/oder pro Rostbahnen mindestens eine Temperaturmesseinrichtung verwendet wird. Die Temperaturmessung kann parallel zu den Rostsegmenten oder im ersten Strahlungszug erfolgen. Damit die Genauigkeit der Temperaturmessung nicht durch Verwirbelungen beeinträchtigt wird, wird vorgeschlagen, dass eine Aufnahme der Temperaturänderung nahe an der Feuerung und spätestens in einem Niveau des Strahlungszuges erfolgt, in die die Rauchgase nach 1 bis 15 Sekunden gelangen.

Vorteilhafte Ausführungsvarianten werden in der Zeichnung dargestellt und im Folgenden näher beschrieben.

Es zeigt:
- Figur 1: schematisch eine Rostfeuerung mit einer Analyse der Schurre A, einer Analyse des Feuers B und einer Analyse der Temperaturen auf der Rostbahn C,
- Figur 2: einen Schnitt durch den Bereich einer Aufgabeschurre einer Feuerungsanlage,
- Figur 3: eine Draufsicht auf die in Figur 2 gezeigte Schurre,
- Figur 4: eine vergrößerte Ansicht aus Figur ,
- Figur 5: ein Bild mit einer in Figur 1 bei B angeordneten Kamera,
- Figur 6: eine Feuerungsanlage mit zwei Strahlungszügen und
- Figur 7: die in Figur 6 gezeigte Feuerungsanlage in perspektivischer Ansicht.

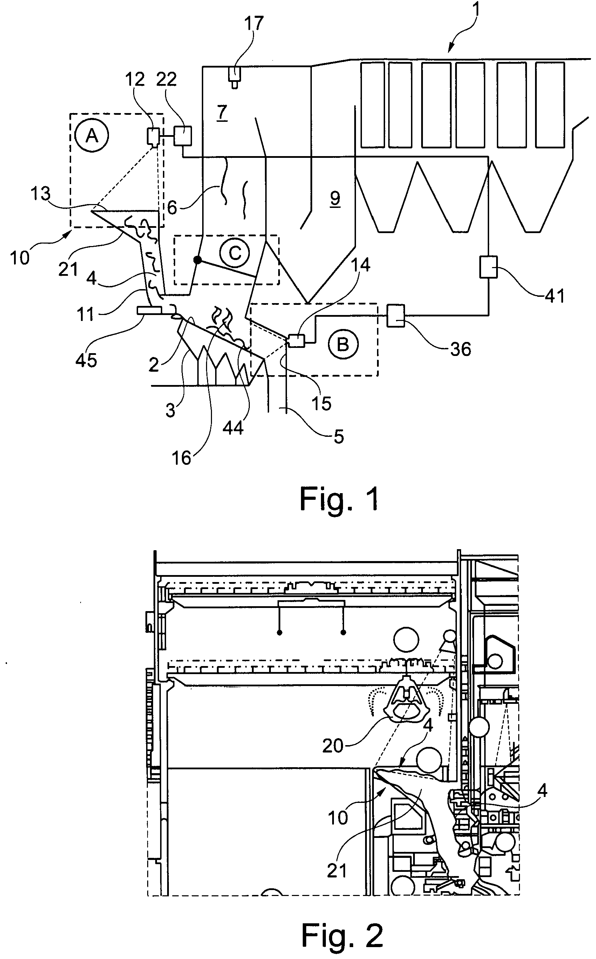

Die in Figur 1 gezeigte Feuerungsanlage 1 ist eine Rostfeuerung mit einem Rost 2, unter dem eine Primärluftzugabe 3 angeordnet ist. Das auf dem Rost 2 verbrannte Material 4 wird über den Rost 3 zu einem Schlackenaustrag 5 gefördert. Das beim Verbrennen des Materials 4 auf dem Rost 2 entstehende Rauchgas 6 gelangt in einen ersten Zug 7 und von dort in weitere Züge 8 und 9, um Wasser zu erhitzen, das als Dampf für eine Energieerzeugungsanlage (nicht gezeigt) genutzt wird.

Beim Betreiben der Feuerungsanlage 1 gelangt Müll als Material 4 von der Schurre 10 durch einen Zuführkanal 11 zum Rost 2 und von dort zum Schlackenaustrag 5. Dabei wird eine Kamera 12 dazu verwendet, die Oberfläche 13 der Schurre zu erfassen und als Bild 14 darzustellen.

Eine weitere Kamera 34 am Ende 15 des Rostes 2 ist auf das Material 4 auf dem Rost 2 und die bei der Verbrennung des Materials 4 entstehende Flamme 16 gerichtet. Dazwischen kann mit einer dritten Kamera 17, die auf dem Rost 2 erzeugte Flamme 16 von oben beobachtet werden.

Die Figur 2 zeigt, wie mittels eines Greifers 20 Material 4 in die Aufgabeschurre 10 geworfen werden kann, das dann auf einer Rutsche 21 in den Kanal 4 und von dort zum Feuerrost 2 gelangt.

Die Kamera 12 ist mit einer Bildauswertung 22 verbunden, die die Abdeckung der Schurre 10 und insbesondere der Rutsche 21 mit Material 4 ermittelt.

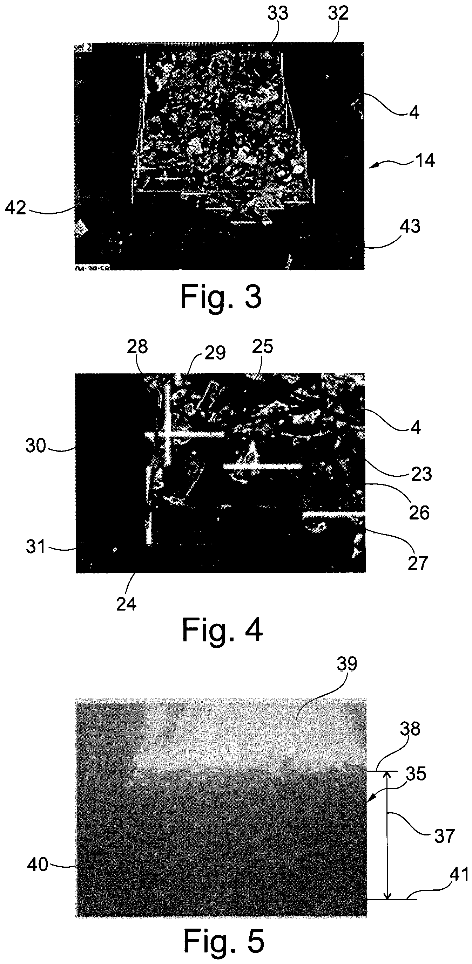

Die Figur 3 und insbesondere deren in Figur 4 gezeigte Vergrößerung zeigen Bereiche 23, in denen die Rutsche 21 mit Material 4 bedeckt ist, und einen Bereich 24 sowie einen Bereich 43, in dem die Oberseite der Rutsche 21 zu sehen ist, da sie in diesem Bereich 24 nicht mit Material 4 bedeckt ist.

Balken 25, 26 und 27 bilden Grenzpunkte im Bild 4, an denen einerseits Material 4 die Schurre 10 abdeckt und andererseits die Oberfläche der Schurre 10 sichtbar ist.

An der Seite 28 der Schurre 10 sind definierte Punkte 29, 30 und 31 als senkrechte Balken angedeutet. Dies ermöglicht es, den Schnittpunkt zwischen waagerechten Balken 25, 26 und 27 und senkrechten Balken 29, 30 und 31 zu ermitteln, um daraus auf die Befüllung der Schurre 10 zurückzuschließen.

Im Bild 14 der Figur 3 zeigt die Linie 33 den Übergang zwischen dem Material 4 und dem Hintergrund 33. Die Höhe dieser Linie 33 im Bild 4 und Abweichungen von einer geraden Linie geben Aufschluss über das Material in der Schurre 10.

Die Figur 5 zeigt ein Bild 35, das in Flussrichtung des Materials 4 am Ende des Rostes 2 mit einer Kamera 14 aufgenommen wurde. Aus diesem Bild 35 ermittelt eine Bildauswertung 36 die Brennbettdicke 37 als Abstand zwischen einer Linie 38 und einer Linie 41. Die Linie 38 ergibt sich aus dem Kontrast zwischen dem hellen Bereich 39 der Flammen 16 und dem dunklen Bereich 40 der Schlacke. Die Höhe der Linie 41 im Bild 35 kann durch Versuche ermittelt werden und ergibt sich auch bei einer Anlage, die noch kein Material 4 auf dem Rost 2 aufweist.

Die Bildauswerteinrichtungen 22 und 36 sind mit der Steuerung 41 der Feuerungsanlage 1 verbunden, sodass bei einem Überstreiten eines Grenzwertes auf die Regelung 41 der Feuerungsanlage eingewirkt werden kann, um die Rostgeschwindigkeit und/oder die Luftzuführung der Feuerungsanlage 1 abhängig von dem an der Schurre 10 ermittelten Grenzwert und/oder der Brennbettdicke 37 zu steuern oder zu regeln.

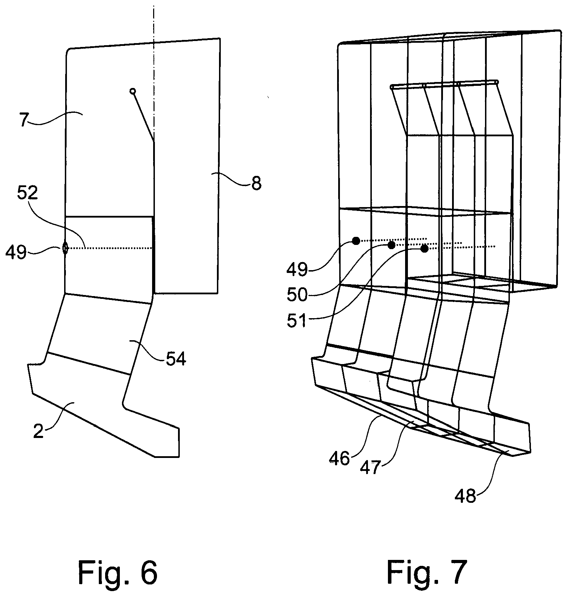

Figur 6 zeigt einen Feuerrost 2 und darüber den ersten Rauchgaszug 7, sowie daran anschließend den zweiten Rauchgaszug 8. Parallel zum Rost 2 oder waagerecht messend ist eine Temperaturmesseinrichtung 49 angeordnet. Dadurch entsteht oberhalb der Sekundärluftebene 54 eine Ebene 52 der Temperaturmessung. Die Figur 7 zeigt eine beispielhafte Anordnung der Temperaturmesseinrichtungen für eine Anlage mit 3 Rostbahnen 46, 47 und 48. Jeder Rostbahn ist eine Temperaturmesseinrichtung 49, 50 und 51 zugeordnet.

## Patentansprüche

1. Verfahren zum Betreiben einer Feuerungsanlage (1) mit einer Aufgabeschurre (10) und einer Kamera (12) zur Erfassung eines Bildes (14) der Oberfläche (13,43) der Schurre (10), wobei die Schurre (10) eine Rutsche (21) aufweist, auf der Material (4) zu einem Rost (2) der Feuerungsanlage (1) fließt, und mit einer Bildauswertung (22) die Abdeckung der Schurre (10) und insbesondere der Rutsche (21) mit Material (4) und/oder die Positionsänderung und damit die Bewegung einzelner Komponenten oder Flächenbereiche (42) innerhalb der Schurre ermittelt wird.

2. Verfahren nach Anspruch 1, wobei die Position zumindest eines Grenzpunktes (25, 26, 27) im Bild (14) ermittelt wird, an dem einerseits Material (4) die Schurre (10) abdeckt und andererseits die Oberfläche (43) der Schurre (10) sichtbar ist.

3. Verfahren nach Anspruch 2, wobei der Grenzpunkt (25, 26, 27) im Bereich der Rutsche (10) ermittelt wird.

4. Verfahren nach Anspruch 2 oder 3, wobei mehrere Grenzpunkte (25, 26, 27) ermittelt werden.

5. Verfahren nach Anspruch 4, wobei die Position einer die Grenzpunkte (25, 26, 27) verbindenden Linie im Bild ermittelt wird.

6. Verfahren nach einem der Ansprüche 2 bis 5, wobei der Abstand mindestens eines Grenzpunktes (25, 26, 27) zu einem definierten Punkt (29, 30, 31) an einer Seite (28) der Schurre (10) ermittelt wird.

7. Verfahren nach einem der Ansprüche 2 bis 4, wobei die sichtbare Linie zwischen Schurre (10) und Material (4) ermittelt wird.

8. Verfahren nach einem der Ansprüche 1 bis 7, wobei das Bild (14) der Oberfläche der Schurre (10) in mehrere Zonen (25, 26, 27, 28, 29) aufgeteilt wird und mit der Bildauswertung (22) die Abdeckung in den einzelnen Zonen (25, 26, 27, 28, 29) ermittelt wird.

9. Verfahren nach einem der vorhergehenden Ansprüche, wobei in zeitlichem Abstand mehrere Bilder (14) oder ein Video aufgenommen werden und mittels der Bildauswertung (22) aus der Veränderung der Bilder (14) ein Füllniveau in der Schurre (10) ermittelt wird.

10. Verfahren nach Anspruch 9, wobei aus der Veränderung der Bilder (14) die Geschwindigkeit ermittelt wird, mit der das Material (4) zum Rost (2) fließt.

11. Verfahren nach einem der Ansprüche 1 bis 10, wobei bei einer vorbestimmten Abdeckung oder einer vorbestimmten Änderung der Abdeckung der Schurre (10) und insbesondere der Rutsche (21) mit Material (4) oder einem bestimmten Materialfluss abhängig von der Beschickerbewegung eine Aktion ausgelöst wird.

12. Verfahren insbesondere nach einem der Ansprüche 9 bis 11, wobei in Flussrichtung des Materials (4) am Ende des Bildes (14) der Übergang von Material (4) zu Hintergrund (32) als Position mindestens eines Punktes und vorzugsweise einer Linie (33) ermittelt wird.

13. Verfahren nach Anspruch 12, wobei der Punkt oder die Linie (33) mit einem Grenzwert verglichen werden und bei Überschreiten dieses Grenzwertes eine Aktion ausgelöst wird.

14. Verfahren nach einem der vorhergehenden Ansprüche, wobei aus dem Bilde (14) der Oberfläche (13,43) der Schurre (10) mit einem lernenden System wie einem neuronalen Netzwerk die Müllqualität und/oder Müllzusammensetzung bestimmt wird.

15. Verfahren nach einem der vorhergehenden Ansprüche, wobei am Ende (15) des Rostes (2) eine Kamera (14) angeordnet ist, und wobei mit einer Bildauswertung (36) die Brennbettdicke (37) und/oder eine Ausbrandlinie (38) und/oder die Bewegung einzelner Komponenten oder Flächenbereiche ermittelt wird.

16. Verfahren nach Anspruch 15, wobei mit der Bildauswertung (36) mit einem lernenden System wie einem neuronalen Netzwerk oder über eine charakteristische Form der Ausbrandlinie (38) ein überschüttetes Brennbett erkannt wird.

17. Verfahren nach Anspruch 15 oder 16, wobei abhängig von der Brennbettdicke (37) und/oder der Ausbrandlinie (38) und/oder der Bewegung einzelner Komponenten oder Flächenbereiche eine Aktion ausgelöst wird.

18. Verfahren nach einem der Ansprüche 15 bis 17, wobei abhängig von der Brennbettdicke (37) und/oder der Ausbrandlinie (38) und/oder der Bewegung einzelner Komponenten oder Flächenbereiche automatisch auf eine Steuerung (41) oder eine Regelung der Feuerungsanlage (1) eingewirkt wird.

19. Verfahren nach einem der Ansprüche 15 bis 18, wobei die Rostgeschwindigkeit abhängig von der Brennbettdicke (37) und/oder der Ausbrandlinie (38) und/oder der Bewegung einzelner Komponenten oder Flächenbereiche gesteuert oder geregelt wird.

20. Verfahren nach einem der Ansprüche 15 bis 19, wobei die Luftzuführung (3) der Feuerungsanlage (1) abhängig von der Brennbettdicke (37) und/oder der Ausbrandlinie (38) und/oder der Bewegung einzelner Komponenten oder Flächenbereiche gesteuert oder geregelt wird.

21. Verfahren nach Anspruch 20, wobei Primärluft (3) der Feuerungsanlage (1) abhängig von der Brennbettdicke (37) und/oder der Ausbrandlinie (38) und/oder der Bewegung einzelner Komponenten oder Flächenbereiche gesteuert oder geregelt wird.

22. Verfahren nach einem der Ansprüche 15 bis 21, wobei die Beschickung einzelner Rostbahnen (46, 47, 48) der Feuerungsanlage (1) abhängig von der Brennbettdicke (37) und/oder der Ausbrandlinie (38) und/oder der Bewegung einzelner Komponenten oder Flächenbereiche gesteuert oder geregelt wird.

23. Verfahren nach einem der vorhergehenden Ansprüche wobei der Rost (2) mehrere Rostzonen und/oder mehrere Rostbahnen (46, 47, 48) und mehrere Brennstoffzufuhreinrichtungen (45) aufweist, wobei zur Einstellung einer gleichmäßigen Wärmefreisetzung auf dem Rost (2) die Temperatur pro Rostzone und/oder pro Rostbahn (46, 47, 48) gemessen wird und abhängig von der gemessenen Temperatur die Brennstoffzufuhreinrichtungen (45) gesteuert werden.

24. Verfahren nach Anspruch 23, wobei pro Rostzone und/oder pro Rostbahnen (46, 47, 48) mindestens eine Temperaturmesseinrichtung (49, 50, 51) verwendet wird.

25. Verfahren nach Anspruch 23 oder 24, wobei die Temperaturmessung parallel zum Rost (2) erfolgt.

26. Verfahren nach Anspruch 23 oder 24, wobei die Temperaturmessung im ersten Strahlungszug (7) erfolgt.

## Claims

1. Method for operating a furnace (1) with a feed chute (10) and a camera (12) for capturing an image (14) of the surface (13, 43) of the chute (10), wherein the chute (10) has a slideway (21) on which the material (4) flows to a grate (2) of the furnace (1), and the coverage of the chute (10) and in particular of the slideway (21) with material (4) and/or the positional change and thus the movement of individual components or surface areas (42) within the chute is determined using an image evaluation (22).

2. Method according to claim 1, wherein the position of at least one boundary point (25, 26, 27) is determined in image (14), at which boundary point the material (4) covers the chute (10) on the one side and surface (43) of the chute (10) is visible on the other side.

3. Method according to claim 2, wherein the boundary point (25, 26, 27) is determined in the area of the slideway (10).

4. Method according to claim 2 or 3, wherein multiple boundary points (25, 26, 27) are determined.

5. Method according to claim 4, wherein the position of a line in the image connecting the boundary points (25, 26, 27) is determined.

6. Method according to one of claims 2 to 5, wherein the distance is determined of at least one boundary point (25, 26, 27) to a defined point (29, 30, 31) on a side (28) of the chute (10).

7. Method according to one of claims 2 to 4, wherein the visible line between the chute (10) and the material (4) is determined.

8. Method according to one of claims 1 to 7, wherein the image (14) of the surface of the chute (10) is divided into multiple zones (25, 26, 27, 28, 29) and the coverage in the individual zones (25, 26, 27, 28, 29) is determined using the image evaluation (22).

9. Method according to one of the preceding claims, wherein multiple images (14) are recorded at time intervals or a video is recorded and a filling level in the chute (10) is determined from the change in the images (14) by means of the image evaluation (22).

10. Method according to claim 9, wherein the speed, with which the material (4) flows to the grate (2), is determined from the change in the images (14).

11. Method according to one of claims 1 to 10, wherein an action is triggered at a predetermined coverage or a predetermined change in the coverage of the chute (10) and in particular of the slideway (21) with material (4), or at a certain material flow depending on the feeder movement.

12. Method in particular according to one of claims 9 to 11, wherein, at the end of the image (14) in the flow direction of the material (4), the transition of the material (4) to the background (32) is determined as the position of at least one point and preferably one line (33).

13. Method according to claim 12, wherein the point or the line (33) is compared to a limit value and an action is triggered upon exceeding this limit value.

14. Method according to one of the preceding claims, wherein the garbage quality and/or garbage composition is ascertained from the images (14) of the surface (13, 43) of the chute (10) using a learning system like a neural network.

15. Method according to one of the preceding claims, wherein a camera (14) is arranged at the end (15) of the grate (2), and wherein the combustion bed thickness (37) and/or a combustion line (38) and/or the movement of individual components or surface areas is determined using an image evaluation (36).

16. Method according to claim 15, wherein an overloaded combustion bed is detected using the image evaluation (36) with a learning system like a neural network or via a characteristic shape of the combustion line (38).

17. Method according to claim 15 or 16, wherein an action is triggered depending on the combustion bed thickness (37) and/or the combustion line (38) and/or the movement of individual components or surface areas.

18. Method according to one of claims 15 to 17, wherein a control (41) or a regulation of the furnace (1) is automatically effected depending on the combustion bed thickness (37) and/or the combustion line (38) and/or the movement of individual components or surface areas.

19. Method according to one of claims 15 to 18, wherein the furnace speed is controlled or regulated depending on the combustion bed thickness (37) and/or the combustion line (38) and/or the movement of individual components or surface areas.

20. Method according to one of claims 15 to 19, wherein the air supply (3) of the furnace (1) is controlled or regulated depending on the combustion bed thickness (37) and/or the combustion line (38) and/or the movement of individual components or surface areas.

21. Method according to claim 20, wherein the primary air (3) of the furnace (1) is controlled or regulated depending on the combustion bed thickness (37) and/or the combustion line (38) and/or the movement of individual components or surface areas.

22. Method according to one of claims 15 to 21, wherein the feeding of individual grate tracks (46, 47, 48) of the furnace (1) is controlled or regulated depending on the combustion bed thickness (37) and/or the combustion line (38) and/or the movement of individual components or surface areas.

23. Method according to one of the preceding claims, wherein the grate (2) has multiple grate zones and/or multiple grate tracks (46, 47, 48) and multiple fuel supply devices (45), wherein the temperature per grate zone and/or per grate track (46, 47, 48) is measured to set a uniform heat release at the grate (2), and the fuel supply devices (45) are controlled depending on the measured temperature.

24. Method according to claim 23, wherein at least one temperature measuring device (49, 50, 51) is used per grate zone and/or per grate track (46, 47, 48).

25. Method according to claim 23 or 24, wherein the temperature measurement is carried out parallel to the grate (2).

26. Method according to claim 23 or 24, wherein the temperature measurement is carried out in the first radiation duct (7).

## Revendications

1. Procédé, destiné à faire fonctionner une installation de combustion (1), pourvue d'une goulotte d'alimentation (10) et d'une caméra (12) destinée à capter une image (14) de la surface (13, 43) de la goulotte (10), la goulotte (10) comportant une glissière (21) sur laquelle de la matière (4) s'écoule vers une grille (2) de l'installation de combustion (1), et à l'aide d'une analyse d'images (22), la couverture de la goulotte (10) et notamment de la glissière (21) avec de la matière (4) et/ou le changement de position, et ainsi la déplacement de composants individuels ou de zones superficielles (42) à l'intérieur de la goulotte étant déterminé(e)s.

2. Procédé selon la revendication 1, la position d'au moins un point limite (25, 26, 27) dans l'image (14), sur lequel d'une part, de la matière (4) recouvre la goulotte (10) et d'autre part, la surface (43) de la goulotte (10) est visible étant déterminée.

3. Procédé selon la revendication 2, le point limite (25, 26, 27) étant déterminé dans la zone de la glissière (10).

4. Procédé selon la revendication 2 ou 3, plusieurs points limites (25, 26, 27) étant déterminés.

5. Procédé selon la revendication 4, la position d'une ligne reliant les points limites (25, 26, 27) étant déterminée dans l'image.

6. Procédé selon l'une quelconque des revendications 2 à 5, l'écart d'au moins un point limite (25, 26, 27) par rapport à un point (29, 30, 31) défini étant déterminé sur un côté (28) de la goulotte (10).

7. Procédé selon l'une quelconque des revendications 2 à 4, la ligne visible étant déterminée entre la goulotte (10) et la matière (4).

8. Procédé selon l'une quelconque des revendications 1 à 7, l'image (14) de la surface de la goulotte (10) étant divisée en plusieurs zones (25, 26, 27, 28, 29) et à l'aide de l'analyse d'images (22), la couverture dans les zones (25, 26, 27, 28, 29) individuelles étant déterminée.

9. Procédé selon l'une quelconque des revendications précédentes, dans un intervalle de temps, plusieurs images (14) ou une vidéo étant enregistrée(s) et à l'aide de l'analyse d'images (22), un niveau de remplissage dans la goulotte (10) étant déterminé à partir de la variation des images (14).

10. Procédé selon la revendication 9, à partir de la variation des images (14) étant déterminée la vitesse à laquelle la matière (4) s'écoule vers la grille (2).

11. Procédé selon l'une quelconque des revendications 1 à 10, une action étant enclenchée en fonction du déplacement du chargeur, lors d'une couverture prédéfinie ou d'une variation prédéfinie de la couverture de la goulotte (10) et notamment de la glissière (21) avec de la matière (4) ou d'un flux de matière défini.

12. Procédé, notamment selon l'une quelconque des revendications 9 à 11, dans la direction du flux de la matière (4), à la fin de l'image (14), le passage de matière (4) vers le fond (32) étant déterminé en tant que position d'au moins un point et de préférence d'une ligne (33).

13. Procédé selon la revendication 12, le point ou la ligne (33) étant comparé(e)s avec une valeur limite, et une action étant déclenchée lors du dépassement de ladite valeur limite.

14. Procédé selon l'une quelconque des revendications précédentes, à partir de l'image (14) de la surface (13, 43) de la goulotte (10), la qualité des ordures et/ou la composition des ordures étant définie avec un système d'auto-apprentissage, comme un réseau neuronal.

15. Procédé selon l'une quelconque des revendications précédentes, sur l'extrémité (15) de la grille (2) étant placée une caméra (14), et par une analyse d'images (36), l'épaisseur du lit de combustion (37) et/ou une ligne de postcombustion (38) et/ou le déplacement de composants ou zones superficielles individuel(le)s étant déterminés.

16. Procédé selon la revendication 15, un lit de combustion submergé étant identifié par l'analyse d'images (36) avec un système d'auto-apprentissage comme un réseau neuronal, ou par l'intermédiaire d'une forme caractéristique de la ligne de postcombustion (38).

17. Procédé selon la revendication 15 ou 16, une action étant déclenchée en fonction de l'épaisseur (37) du lit de combustion et/ou de la ligne de postcombustion (38) et/ou du déplacement de composants ou zones superficielles individuel(le)s.

18. Procédé selon l'une quelconque des revendications 15 à 17, une commande (41) ou une régulation de l'installation de combustion (1) étant mise en action automatiquement, en fonction de l'épaisseur (37) du lit de combustion et/ou de la ligne de postcombustion (38) et/ou du déplacement de composants ou zones superficielles individuel(le)s.

19. Procédé selon l'une quelconque des revendications 15 à 18, la vitesse de la grille étant commandée ou régulée en fonction de l'épaisseur du lit de combustion (37) et/ou de la ligne de postcombustion (38) et/ou du déplacement de composants ou zones superficielles individuel(le)s.

20. Procédé selon l'une quelconque des revendications 15 à 19, l'apport d'air (3) de l'installation de combustion (1) étant commandé ou régulé en fonction de l'épaisseur du lit de combustion (37) et/ou de la ligne de postcombustion (38) et/ou du déplacement de composants ou zones superficielles individuel(le)s.

21. Procédé selon la revendication 20, de l'air primaire (3) de l'installation de combustion (1) étant commandé ou régulé en fonction de l'épaisseur du lit de combustion (37) et/ou de la ligne de postcombustion (38) et/ou du déplacement de composants ou zones superficielles individuel(le)s.

22. Procédé selon l'une quelconque des revendications 15 à 21, le chargement de parcours de grille (46, 47, 48) de l'installation de combustion (1) étant commandé ou régulé en fonction de l'épaisseur du lit de combustion (37) et/ou de la ligne de postcombustion (38) et/ou du déplacement de composants ou zones superficielles individuel(le)s.

23. Procédé selon l'une quelconque des revendications précédentes la grille (2) comportant plusieurs zones de grille et/ou plusieurs parcours de grille (46, 47, 48), et plusieurs systèmes d'apport de combustible (45), pour le réglage d'une libération de chaleur homogène sur la grille (2), la température par zone de grille et/ou par parcours de grille (46, 47, 48) étant mesurée et les systèmes d'apport de combustible (45) étant commandés en fonction de la température mesurée.

24. Procédé selon la revendication 23, au moins un système de mesure de la température (49, 50, 51) étant utilisé par zone de grille et / ou par parcours de grille (46, 47, 48).

25. Procédé selon la revendication 23 ou 24, la mesure de la température s'effectuant à la parallèle de la grille (2).

26. Procédé selon la revendication 23 ou 24, la mesure de la température s'effectuant dans la première voie de rayonnement (7).
